# EUROPÄISCHE PATENTSCHRIFT

(11) **EP 0 715 645 B1**
(45) Veröffentlichungstag und Bekanntmachung des Hinweises auf die Patenterteilung: **19.11.1997**
(21) Anmeldenummer: 94924877.7
(22) Anmeldetag: 16.08.1994
(51) Int. Cl.: C11D 1/10, C11D 3/33, C11D 7/32

(54) **VERWENDUNG VON PHENOLISCHEN KOMPLEXBILDNERN**
USE OF PHENOLIC COMPLEXING AGENTS
UTILISATION D'AGENTS COMPLEXANTS PHENOLIQUES

(30) Priorität: 26.08.1993 DE 4328670
(43) Veröffentlichungstag der Anmeldung: 12.06.1996
(60) Teilanmeldung: 97104945.7
(73) Patentinhaber: BASF AKTIENGESELLSCHAFT, 67056 Ludwigshafen (DE)
(72) Erfinder: SCHNEIDER, Juergen, D-67251 Freinsheim (DE); OFTRING, Alfred, D-67098 Bad Duerkheim (DE); FREYBERG, Peter, D-67063 Ludwigshafen (DE); SCHUMACHER, Rudolf, D-67459 Boehl-Iggelheim (DE); BAUR, Richard, D-67112 Mutterstadt (DE); POTTHOFF-KARL, Birgit, D-67061 Ludwigshafen (DE); KUD, Alexander, D-55234 Eppelsheim (DE)
(86) Internationale Anmeldenummer: EP9402720
(87) Internationale Veröffentlichungsnummer: WO9506095

(56) Entgegenhaltungen:
- EP-A- 0 413 146
- EP-A- 0 426 876
- GB-A- 718 509
- PATENT ABSTRACTS OF JAPAN vol. 9 no. 1 (C-259) ,5.Januar 1985 & JP,A,59 157062 (FUJI SHASHIN FILM) 6.September 1984, in der Anmeldung erwähnt
- CHEMICAL ABSTRACTS, vol. 86, no. 19, 9.Mai 1977 Columbus, Ohio, US; abstract no. 139627d, Seite 524; Spalte L; & ES,A,415 154 (S. A. DABEER) 16.Februar 1976
- DATABASE WPI Week 7803 Derwent Publications Ltd., London, GB; AN 78-05888A & SU,A,525 666 (TIMAKOVA L. M.) , 8.Juni 1977

## Beschreibung

Die vorliegende Erfindung betrifft die Verwendung von phenolischen Komplexbildnern für Erdalkali- und Schwermetallionen der allgemeinen Formel I oder II 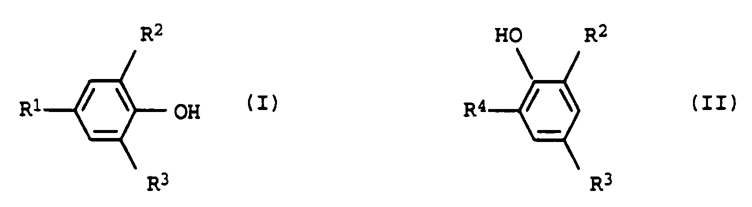 in denen
- R¹: C₆- bis C₂₀-Alkyl oder -Alkenyl, welches durch ein oder mehrere nicht benachbarte Sauerstoffatome unterbrochen sein kann, oder eine Gruppe der Formel -O-CO-R⁵, -CO-O-R⁵, -NH-CO-R⁵, -NR⁶⁻CO-R⁵, -CO-NH-R⁵, -CO-NR⁶-R⁵, -NH-SO₂-R⁵, -NR⁶-SO₂-R⁵, -SO₂-NH-R⁵ oder -SO₂-NR⁶-R⁵ bedeutet, wobei R⁵ für C₆- bis C₂₀-Alkyl oder -Alkenyl, welches durch ein oder mehrere nicht benachbarte Sauerstoffatome unterbrochen sein kann, und R⁶ für C₁- bis C₄-Alkyl steht,
- R² und R³: Wasserstoff oder eine Gruppe der Formel -CH₂-N(CH₂COOM)₂, in der M für Wasserstoff, Alkalimetall, Ammonium oder substituiertes Ammonium steht, bezeichnet, wobei mindestens einer der Reste R² oder R³ eine Gruppe der Formel -CH2-N(CH2COOM)2 bezeichnen muß, und
- R⁴: für eine Gruppe der Formel -CO-O-R⁵, -CO-NH-R⁵ oder CO-NR⁶⁻R⁵ steht,
für die im Anspruch 1 genannten technische Anwendungsgebiete.

Phenolische Komplexbildner der Struktur I oder II sind im Prinzip bekannt. So werden in der JP-OS 84/157 062 (1) der Formel I analoge Verbindungen offenbart, in der anstelle von R¹ C₆- bis C₁₅-Alkyl, Phenyl, C₇- bis C₄₀-Alkanamid, C₆- bis C₂₀-Sulfonamid, C₇- bis C₁₇-Alkoxycarbonyl, C₇- bis C₁₇-Carbamoyl, C₆- bis C₁₉-Sulfamoyl, C₆- bis C₁₀-Sulfonyl oder eine heterocyclische Gruppe steht. Diese Verbindungen haben verbesserte Eigenschaften bezüglich ihrer metallkomplexierenden Wirkung.

Aus der EP-A 426 876 (2) sind Flüssigwaschmittelformulierungen für die Textilwasche bekannt, die als anionische Tenside Verbindungen gemäß Formel I oder II enthalten.

Als Komplexbildner für Erdalkali- und Schwermetallionen auf den verschiedensten technischen Gebieten mit ihren teilweise stark voneinander abweichenden Anforderungs- und Problemfeldern werden üblicherweise immer noch altbekannte und bewährte Systeme wie Polyphosphate, Nitrilotriessigsäure oder Ethylendiamintetraessigsäure eingesetzt. Diese Mittel zeigen allerdings gewisse Nachteile, prinzipielle Schwachpunkte sind insbesondere ihr noch verbesserungsbedürftiges Calcium- und Mangan-Bindevermögen, ihre noch nicht optimale stabilisierende Wirkung in Bleichbädern und Bleichsystemen sowie ihre meist unzureichende biologische Abbaubarkeit bzw. Eliminierbarkeit.

Aufgabe der vorliegenden Erfindung war es daher, auf einigen speziellen technischen Anwendungsgebieten in ihren Eigenschaften verbesserte Komplexbildner für Erdalkali- und Schwermetallionen bereitzustellen, da die bekannten Mittel des Standes der Technik dort Mangel aufweisen.

Demgemäß wurde die Verwendung der eingangs definierten Phenolderivate I und II als Komplexbildner für Erdalkali- und Schwermetallionen gefunden, welche dadurch gekennzeichnet ist, daß man sie in
(b) technischen Reinigungsmittelformulierungen für harte Oberflächen aus Metall, Kunststoff, Lack oder Glas,
(c) alkalischen Reinigungsmittelformulierungen für die Getränkeund Nahrungsmittelindustrie, und
(d) Geschirreinigungsmittelformulierungen.
einsetzt.

Der Rest R¹ bzw. R⁵ in den Formeln I und II steht vor allem für geradkettiges oder verzweigtes C₆- bis C₂₀-Alkyl oder -Alkenyl, insbesondere für C₈- bis C₁₈-Alkyl, z.B. n-Hexyl, n-Heptyl, n-Octyl, 2-Ethylhexyl, n-Nonyl, iso-Nonyl, n-Decyl, iso-Decyl, n-Undecyl, iso-Undecyl, n-Dodecyl, iso-Dodecyl, n-Tridecyl, iso-Tridecyl, n-Tetradecyl, n-Hexadecyl, n-Octadecyl oder n-Eicosyl. Eine Unterbrechung durch nicht benachbarte Sauerstoffatome in Form von beispielsweise Polyethylenglykolether-Strukturen kann zur Einstellung der Balance von Hydrophilie und Hydrophobie im Molekül dienen, Beispiele für derartige Reste sind n-C₁₂H₂₅-(OCH₂CH₂)ₘ- (m = 2 bis 4) und n-C₁₀H₂₁-O-CH₂-.

Als Rest R⁶ am Amid-Stickstoff kommen Ethyl, n-Propyl, iso-Propyl, n-Butyl, iso-Butyl, sec.-Butyl, tert.-Butyl und insbesondere Methyl in Betracht.

Als Salze der Verbindungen I bzw. II eignen sich vor allem die Natrium-, Kalium- und Ammoniumsalze, insbesondere das Di- bzw. Tetranatrium-, das Di- bzw. Tetrakalium- und das Di- bzw. Tetraammoniumsalz, je nachdem, ob eine oder zwei -CH₂-N(CH₂COOM)₂-Gruppen im Molekül vorliegen, sowie organische Aminsalze mit einem tertiaren Stickstoffatom.

Als den organischen Aminsalzen zugrundeliegende Basen kommen insbesondere tertiäre Amine wie Trialkylamine mit 1 bis 4 C-Atomen im Alkyl, z.B. Trimethyl- und Triethylamin, und Trialkanolamine mit 2 oder 3 C-Atomen im Alkanolrest, z.B. Triethanolamin, Tri-n-propanolamin oder Triisopropanolamin, in Betracht.

In einer bevorzugten Ausführungsform verwendet man Phenolderivate der allgemeinen Formel Ia 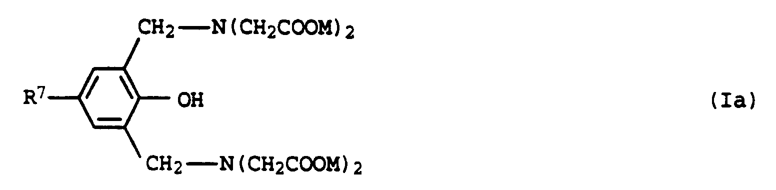 in der
- R⁷: C₈- bis C₁₈-Alkyl bedeutet und
- M: für Wasserstoff, Alkalimetall, Ammonium oder substituiertes Ammonium steht.

Ganz besonders bevorzugt werden Phenolderivate Ia, bei denen R⁷ für n-Dodecyl oder insbesondere iso-Dodecyl steht.

Die Verbindungen I bzw. II lassen sich, wie bereits in (2) beschieben, am besten durch eine einstufige Mannich-Reaktion aus den entsprechenden Phenolen und jeweils 1 oder 2 mol Formaldehyd und Iminodiessigsäure herstellen.

Die beschriebenen Verbindungen I und II und ihre Salze sind in hervorragender Weise geeignet, Erdalkali- und Schwermetallionen, insbesondere Calcium-, Magnesium-, Eisen-, Nickel-, Zink-, Kupfer- und Manganionen, zu komplexieren. Aufgrund dieser Fähigkeit weisen sie eine Vielzahl von technischen Anwendungsmöglichkeiten auf. Da es sich um biologisch abbaubare oder eliminierbare Verbindungen handelt, können sie in großen Mengen überall dort eingesetzt werden, wo die Abwässer geklärt werden müssen und auch phosphorhaltige Verbindungen wie Phosphate vermieden werden sollen.

Eine erfindungsgemäße Verwendung (b) liegt in technischen Reinigungsmittelformulierungen für harte Oberflächen aus Metall, Kunststoff, Lack oder Glas.

Für die Reinigung von harten Oberflächen wurden technische Reinigungsmittelformulierungen insbesondere mit verbesserten Eigenschaften bei der Schmutzentfernung gesucht. Zur Verringerung der Abwasserbelastung ist es außerdem wünschenswert, ganz auf hierbei üblicherweise mitverwendete organische Lösungsmittel zu verzichten.

Als Einsatzgebiete für die die Verbindungen I und II oder ihre Salze enthaltenden technischen Reinigungsmittelformulierungen kommen vor allem in Betracht:
- Alkalische Entroster
- Alkalische Tauchentfetter
- Allzweckreiniger
- Autowaschmittel für Bürsten- und Hochdruckwäsche
- Dampfstrahlreiniger
- Elektrolytische Entfetter, insbesondere für Stahl
- Elektrolytische Entroster
- Elektrolytische Entzunderer
- Hochalkalische Reiniger
- Hochdruckreiniger
- Kettengleitmittel für die Transportbänder von Flaschenbefüllungs- und Reinigungsanlagen
- Passivierungsmittel für Stahl
- Spritzentfetter
- Wäßrige Kaltreiniger

In der Regel enthalten diese Reinigungsmittelformulierungen 0,1 bis 30 Gew.-% der Verbindungen I oder II oder deren Salze.

Für die einzelnen Einsatzgebiete übliche Formulierungen sind dem Fachmann im Prinzip bekannt. In der Regel enthalten solche Formulierungen neben den Komplexbildnern 1 bis 35 Gew.-% Tenside anionischer oder vorzugsweise nichtionischer Natur, welche je nach Einsatzzwecke schäumend oder schaumarm sind, sowie gewünschtenfalls als weitere Hilfsmittel weitere Komplexbildner, Gerüststoffe, Schaumdämpfer, Emulgatoren, Korrosionsinhibitoren, Reduktionsmittel, Lösevermittler, Dispergiermittel und Konservierungsmittel in den hierfür üblichen Konzentrationen. Je nach Einsatzzweck können auch noch andere Komponenten mit spezieller Wirkung hinzukomnen. Auf organische Lösungsmittel kann bei den beschriebenen Formulierungen weitgehend verzichtet werden.

Rezeptvorschlage für derartige technische Reinigungsformulierungen finden sich beispielsweise in der Technischen Information "Technische Reinigungsmittel" TI/ES 1167d vom Januar 1991 der BASF Aktiengesellschaft; die dort angegebenen Komplexbildner des Standes der Technik sind durch die Phenolderivate I oder II bzw. ihre Salze zu ersetzen.

Eine weitere erfindungsgemäße Verwendung (c) für die Verbindungen I und II und ihre Salze liegt in alkalischen Reinigungsmittelformulierungen für die Getränke- und Nahrungsmittel- industrie, insbesondere für die Flaschenreinigung in der Getränkeindustrie sowie die Apparatereinigung in Molkereien, in Brauereien, in der Konserven-, der Backwaren-, der Zucker-, der fettverarbeitenden und der fleischverarbeitenden Industrie.

Für die Reinigung von Behaltnissen und Apparaturen in der Getränke- und Nahrungsmittelindustrie wurden Formulierungen insbesondere mit verbesserten Eigenschaften bei der Schmutzentfernung gesucht. Zur Verringerung der Abwasserbelastung ist es außerdem wünschenswert, ganz auf organische Lösungsmittel in derartigen Formulierungen zu verzichten.

Die vorliegenden alkalischen Reinigungsmittelformulierungen weisen in der Regel pH-Werte von 8 bis 14, vorzugsweise von 9 bis 13, insbesondere von 10 bis 12, auf.

Ein bevorzugtes Einsatzgebiet für die beschriebenen Reinigungsmittelformulierungen ist die Flaschenreinigung in der Getrankeindustrie, insbesondere mit automatischen Flaschenspülmaschinen mit Stundenleistungen bis zu üblicherweise 30.000 bis 70.000 Flaschen. Die verschmutzten Flaschen enthielten beispielsweise Bier, Milch, Erfrischungsgetränke, Fruchtsäfte, Süßmost oder Mineral-wasser.

Ein weiteres bevorzugtes Einsatzgebiet für die beschriebenen Reinigungsmittelformulierungen ist die Apparatereinigung in Molkereien. Bei der Reinigung von Butterfertigern, bei der es hauptsachlich auf die Entfettung ankommt, können sie mit vorteilhafter Wirkung eingesetzt werden. Insbesondere jedoch dort, wo Rückstände oder Beläge aus Calciumphosphat, anderen Calciumsalzen zumeist organischer Säuren und Casein ("Milchstein") zu entfernen sind, also z. B. bei Milch-Plattenerhitzern, Tellereinsätzen von Milchzentrifugen oder Lager- und Transport-Tanks für Milch, eignen sich die die Verbindungen I oder II bzw. ihre Salze enthaltende Reinigungsmittel in hervorragender Weise.

Ein weiteres bevorzugtes Einsatzgebiet für die beschriebenen Reinigungsmittelformulierungen ist die Apparatereinigung in Brauereien. Hier sind vor allem Rückstände oder Beläge aus Calciumoxalat, Hopfenharzen und Eiweißverbindungen ("Bierstein") zu entfernen, beispielsweise aus Gärtanks, Lagertanks oder Bierleitungen.

Ein weiteres bevorzugtes Einsatzgebiet für die beschriebenen Reinigungsmittelformulierungen ist die Apparatereinigung in der Konservenindustrie. Beim Erhitzen der mit Nahrungsmitteln gefüllten und geschlossenen Blechdosen, üblicherweise in einem Autoklaven, oder bei der Endreinigung von Dosen, z. B. in einer Durchlaufspritzmaschine, Massen Reinigungsmittel mitverwendet werden, die die Reste des Abfüllgutes abwaschen, ohne das Weißblech oder dessen Lackierung anzugreifen. Außerdem soll das Reinigungsmittel verhindern, daß sich Wassersteinbelage auf den Dosen oder in den Apparaten abscheiden.

Ein weiteres bevorzugtes Einsatzgebiet für die beschriebenen Reinigungsmittelformulierungen ist die Apparatereinigung in der Backwarenindustrie, insbesondere die Reinigung von Back- und Teigformen, welche mit angebrannten Backfett- und Teigresten verunreinigt sind. Die Reinigung geschieht üblicherweise durch Abkochen mit den alkalischen Reinigungslösungen oder durch Waschen in Durchlaufspritzanlagen.

Ein weiteres bevorzugtes Einsatzgebiet für die beschriebenen Reinigungsmittelformulierungen ist die Apparatereinigung in der Zukkerindustrie. Bei der Gewinnung von Saccharose aus Zuckerrüben oder Zuckerrohr fallen Calciumsalze enthaltende Verunreinigungen oder Rückstände an, für deren Entfernung sich die die Verbindungen I oder II bzw. ihre Salze enthaltenden beschriebenen Formulierungen in hervorragender Weise eignen.

Ein weiteres bevorzugtes Einsatzgebiet für die beschriebenen Reinigungsmittelformulierungen ist die Apparatereinigung in der fettverarbeitenden Industrie, die aus Fetten tierischen oder pflanzlichen Ursprungs vor allem Schmalz, Talg, Speiseöle oder durch katalytische Hydrierung gehartete Fette oder fette Öle, z. B. Margarine, erzeugt. Derartige Produkte stellen neben ihrer Bedeutung auf dem Nahrungsmittelbereich auch wichtige Rohstoffe für die Herstellung von Produkten zur Textilveredlung, von Anstrichmitteln, Lederpflegemitteln, kosmetischen Praparaten, Kerzen, Seifen, Tensiden, Schmierstoffen, Weichmachern, Zement- und Asphaltzusatzen sowie von Kunststoffen dar.

Ein weiteres bevorzugtes Einsatzgebiet für die beschriebenen Reinigungsmittelformulierungen ist die Apparatereinigung in der fleischverarbeitenden Industrie. Hier müssen insbesondere wassersteinverhütende Reinigungsmittel eingesetzt werden, z. B. in den sog. Dampfstrahl-Reinigungsgeräten, bei denen ein heißes Dampf-Flüssigkeits-Gemisch auf die zu reinigenden Apparate und Gerate gestrahlt wird.

Die beschriebenen Phenolderivate I oder II bzw. ihre Salze enthaltenden alkalischen Reinigungsmittelformulierungen können weitgehend frei von organischen Lösungsmitteln zum Einsatz gebracht werden. Somit wird eine mögliche Umweltbelastung weitgehend ausgeschlossen.

Eine für die aufgezählten Einsatzgebiete der Getränke- und Nahrungsmittelindustrie übliche wäßrige Reinigungsmittelformulierung enthält
(i) 0,05 bis 30 Gew.-%, vorzugsweise 0,1 bis 25 Gew.-%, insbesondere 0,5 bis 15 Gew.-% Phenolderivate I oder II oder Alkalimetall-, Ammonium- oder substituierte Ammoniumsalze hiervon,
(ii) 2 bis 50 Gew.-%, vorzugsweise 5 bis 40 Gew.-%, insbesondere 8 bis 25 Gew.-% Alkalimetallhydroxid, -carbonat, -silicat oder einer Mischung hieraus und
(iii) 1 bis 30 Gew.-%, vorzugsweise 2 bis 25 Gew.-%, insbesondere 3 bis 20 Gew.-% Tenside.

Hierbei eignen sich als Komponente (ii) vor allem Natrium- und Kaliumhydroxid, daneben aber auch Natrium- und Kaliumcarbonat; es können auch Mischungen der genannten Alkalien eingesetzt werden.

Als Tenside (iii) können alle üblichen anionischen oder nichtionischen Tenside oder Mischungen hieraus verwendet werden, vor allem eignen sich jedoch Alkylsulfate, Alkylsulfonate, Fettalkoholalkoxylate, Oxoalkoholalkoxylate, Alkylpolyglucoside und Fettaminalkoxylate.

Diese Zusammensetzung stellt eine Grundformulierung für alle genannten Anwendungsgebiete dar. Im einzelnen innerhalb dieser Grundformulierung voneinander abweichende Zusammensetzung sind durch die verschiedenen Arten von Nahrungsmittel- und Getränkeverschmutzungen, die unterschiedlichen Mengen an Erdalkalimetallionen in diesen Rückständen und Belägen sowie durch die unterschiedlich empfindlichen Materialien der zu reinigenden Behältnissen und Apparaturen bei den verschiedenen Anwendungsgebieten zu erklären. In diesem Zusammenhang ist auch erwähnenswert, daß die beschriebenen alkalischen Reinigungsmittelformulierungen, welche die Verbindungen I oder II oder ihre Salze enthalten, in der Regel keine Korrosionen, auch bei empfindlichen Apparatematerialien, hervorrufen.

Die oben beschriebene Grundformulierung aus den Komponenten (i) bis (iii) kann noch übliche Hilfsmittel in den hierbei üblichen Konzentrationen enthalten, beispielsweise Desinfektionsmittel zur Erzielung des angestrebten bakteriologischen Reinheitsgrades, Netzmittel, Lösevermittler, Korrosionsinhibitoren oder Konservierungsmittel.

Eine weitere erfindungsgemäße Verwendung (d) für die Verbindungen I und II und ihre Salze liegt in Geschirreinigungsmittelformulierungen, insbesondere in phosphatfreien Mitteln für das maschinelle Geschirreinigen in Geschirrspülmaschinen im Haushalt oder in Gewerbebetrieben, z. B. Großküchen oder Restaurants.

Generell können Phenolderivate I und II und ihre Salze in vorteilhafter Weise überall dort eingesetzt werden, wo bei technischen Verfahren Ausfällungen von Calcium-, Magnesium- und Schwermetallsalzen stören und verhindert werden sollen, beispielsweise zur Verhinderung von Ablagerungen und Verkrustungen in Kesseln, Rohrleitungen, an Sprühdüsen oder allgemein an glatten Oberflächen.

Sie können zur Stabilisierung von Phosphaten in alkalischen Entfettungsbädern und Verhinderung der Ausfällung von Kalkseifen dienen und verhindern dadurch das "Anlaufen" von Nichteisenoberflächen und verlängern die Standzeiten von alkalischen Reinigerbädern.

Die Kühlwasserbehandlung mit den Verbindungen I und II verhindert Ablagerungen oder löst bereits vorhandene wieder auf. Ein Vorteil ist die generelle Anwendbarkeit in alkalischem Medium und damit die Beseitigung von Korrosionsproblemen.

Die Phenolderivate I und II und ihre Salze eignen sich vor allem deshalb so gut für die beschriebenen Anwendungszwecke, weil sie außerordentlich effektive Komplexbildner für Erdalkalimetallionen und für Schwermetallionen, insbesondere für Calcium und Mangan, darstellen. Ihr Calcium- und ihr Mangan-Bindevermögen sind außergewöhnlich hoch.

Weitere Vorteile sind ihr geringes Toxizitätspotential und ihre ausreichende biologische Abbaubarkeit oder Eliminierbarkeit.

## Patentansprüche

1. Verwendung von Phenolderivaten der allgemeinen Formel I oder II 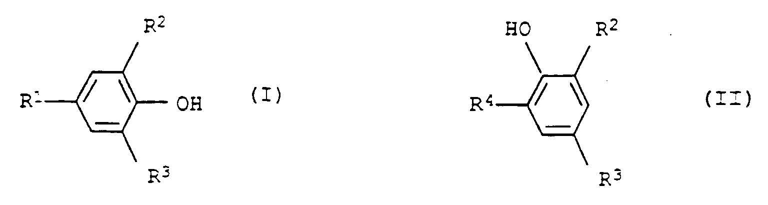 in denen
R¹ C₆- bis C₂₀-Alkyl oder -Alkenyl, welches durch ein oder mehrere nicht benachbarte Sauerstoffatome unterbrochen sein kann, oder eine Gruppe der Formel -O-CO-R⁵, -CO-O-R⁵, -NH-CO-R⁵, -NR⁶-CO-R⁵, -CO-NH-R⁵, -CO-NR⁶⁻R⁵, -NH-SO₂-R⁵, -NR⁶-SO₂-R⁵, -SO₂-NH-R⁵ oder -SO₂-NR⁶-R⁵ bedeutet, wobei R⁵ für C₆- bis C₂₀-Alkyl oder -Alkenyl, welches durch ein oder mehrere nicht benachbarte Sauerstoffatome unterbrochen sein kann, und R⁶ für C₁- bis C₄-Alkyl steht,
R² und R³ Wasserstoff oder eine Gruppe der Formel -CH₂-N(CH₂COOM)₂, in der M für Wasserstoff, Alkalimetall, Ammonium oder substituiertes Ammonium steht, bezeichnet, wobei mindestens einer der Reste R² oder R³ eine Gruppe der Formel -CH₂-N(CH₂COOM)₂ bezeichnen muß, und
R⁴ für eine Gruppe der Formel -CO-O-R⁵, -CO-NH-R⁵ oder CO-NR⁶-R⁵ steht,
als Komplexbildner für Erdalkali- und Schwermetallionen, dadurch gekennzeichnet, daß man sie in
(b) technischen Reinigungsmittelformulierungen für harte Oberflächen aus Metall, Kunststoff, Lack oder Glas,
(c) alkalischen Reinigungsmittelformulierungen für die Getränke- und Nahrungsmittelindustrie und
(d) Geschirreinigungsmittelformulierungen
einsetzt.

2. Verwendung nach Anspruch 1 von Phenolderivaten der allgemeinen Formel Ia 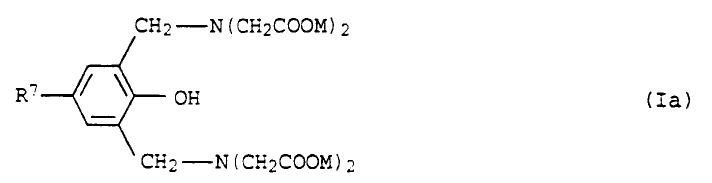 in der
R⁷ C₈- bis C₁₈-Alkyl bedeutet und
M für Wasserstoff, Alkalimetall, Ammonium oder substituiertes Ammonium steht.

## Claims

1. The use of phenol derivatives of the general formula I or II 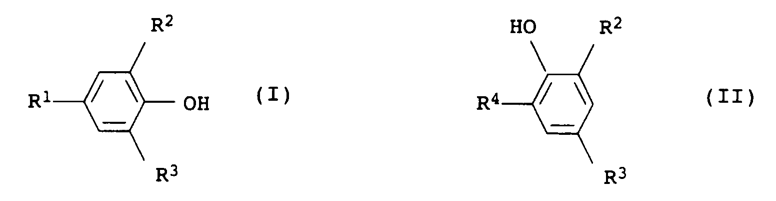 where
R¹ is C₆- to C₂₀-alkyl or -alkenyl with or without interruption by one or more nonadjacent oxygen atoms or is a group of the formula -O-CO-R⁵, -CO-O-R⁵, -NH-CO-R⁵, -NR⁶-CO-R⁵, -CO-NH-R⁵, -CO-NR⁶-R⁵, -NH-SO₂-R⁵, -NR⁶-SO₂-R⁵, -SO₂-NH-R⁵ or -SO₂-NR⁶-R⁵, where R⁵ is C₆- to C₂₀-alkyl or -alkenyl with or without interruption by one or more nonadjacent oxygen atoms and R⁶ is C₁- to C₄-alkyl,
R² and R³ are each hydrogen or a group of the formula -CH₂-N(CH₂COOM)₂, where M is hydrogen, alkali metal, ammonium or substituted ammonium, with the proviso that at least one of R² and R³ shall be a group of the formula -CH₂-N(CH₂COOM)₂, and
R⁴ is a group of the formula -CO-O-R⁵, -CO-NH-R⁵ or CO-NR⁶-R⁵,
as complexing agent for alkaline earth and heavy metal ions, characterized in that they are used in
(b) industrial cleaning agent formulations for hard surfaces made of metal, plastic, paint or glass,
(c) alkaline cleaning agent formulations for the beverage and food industry, and
(d) dish cleaning agent formulations.

2. A use as claimed in claim 1 of phenol derivatives of the general formula Ia 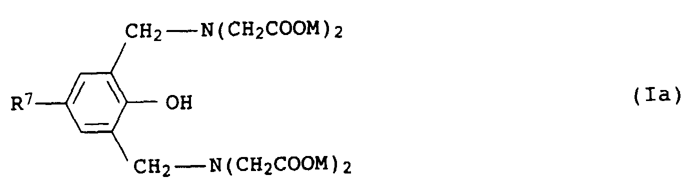 where
R⁷ is C₈- to C₁₈-alkyl, and
M is hydrogen, alkali metal, ammonium or substituted ammonium.

## Revendications

1. Utilisation de dérivés phénoliques de formule générale I ou II 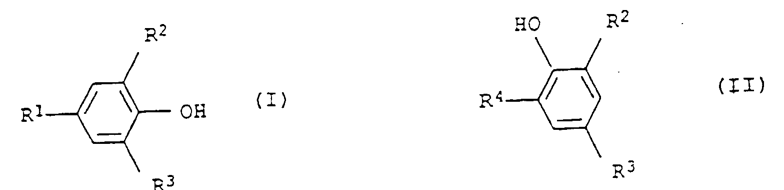 dans lesquelles
R¹ est mis pour un groupement alkyle ou alcényle en C₆-C₂₀, pouvant être interrompu par un ou plusieurs atomes d'oxygène non voisins, ou un groupement de formule -O-CO-R⁵, -CO-O-R⁵, -NH-CO-R⁵, -NR⁶-CO-R⁵, -CO-NH-R⁵, -CO-NR⁶-R⁵, -NH-SO₂-R⁵, -NR⁶-SO₂-R⁵, -SO₂-NH-R⁵ ou -SO₂-NR⁶-R⁵, où R⁵ est mis pour un groupement alkyle ou alcényle en C₆-C₂₀, pouvant être interrompu par un ou plusieurs atomes d'oxygène non voisins, et R⁶ est mis pour un groupement alkyle en C₁-C₄,
R² et R³ sont mis pour un atome d'hydrogène ou un groupement de formule -CH₂-N(CH₂COOM)₂, dans laquelle M est mis pour un atome d'hydrogène, de métal alcalin, un groupement ammonium ou ammonium substitué, au moins un des deux restes R² ou R³ devant représenter un groupement de formule -CH₂-N(CH₂COOM)₂, et
R⁴ est mis pour un groupement de formule -CO-O-R⁵, -CO-NH-R⁵ ou CO-NR⁶-R⁵,
en tant qu'agents complexants pour des ions de métaux alcalino-terreux et de métaux lourds, caractérisé en ce qu'on les utilise dans
b) des formulations de détergents techniques pour des surfaces dures en métal, en matière plastique, en laque ou en verre,
c) des formulations de détergents alcalins pour l'industrie, des boissons et des produits alimentaires, et
d) des formulations de détergents pour le lavage de la vaisselle.

2. Utilisation selon la revendication 1 de dérivés phénoliques de formule générale Ia 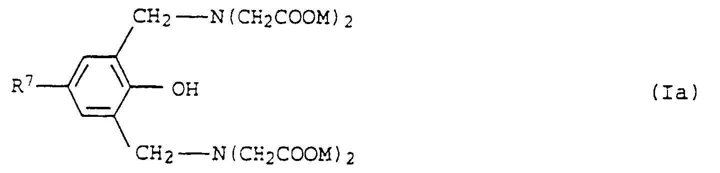 dans laquelle
R⁷ représente un groupement alkyle en C₈-C₁₈ et
M représente un atome d'hydrogène, de métal alcalin, un groupement ammonium ou ammonium substitué.
